# EUROPÄISCHE PATENTSCHRIFT

(11) **EP 2 527 698 B1**
(45) Veröffentlichungstag und Bekanntmachung des Hinweises auf die Patenterteilung: **18.09.2013**
(21) Anmeldenummer: 12168098.7
(22) Anmeldetag: 15.05.2012
(51) Int. Cl.: F16K 15/06

(54) **Rückschlagsperrventil und Rohrverbindung**
Non-return valve and tube connection
Valve de retenue anti-retour et raccord de tuyau

(30) Priorität: 25.05.2011 DE 102011076461
(43) Veröffentlichungstag der Anmeldung: 28.11.2012
(73) Patentinhaber: MAHLE International GmbH, 70376 Stuttgart (DE)
(72) Erfinder: Aktas, Julius, 74321 Bietigheim-Bissingen (DE); Özkaya, Yakup, 70806 Kornwestheim (DE); Renne, Detlef, 70372 Stuttgart (DE); Ruppel, Stefan, 69126 Heidelberg-Emmertsgrund (DE); Sticht, Gabriele, 70190 Stuttgart (DE); Wiesner, Ulrich, 71332 Waiblingen (DE)
(74) Vertreter: BRP Renaud & Partner

(56) Entgegenhaltungen:
- WO-A1-03/083335
- DE-A1-102007 001 728
- GB-A- 1 428 596
- US-A- 5 080 122

## Beschreibung

Die vorliegende Erfindung betrifft ein Rückschlagsperrventil mit den Merkmalen des Oberbegriffs des Anspruchs 1. Die Erfindung betrifft außerdem eine Rohrverbindung, die mit einem derartigen Rückschlagsperrventil ausgestattet ist.

In einer Vielzahl fluidischer Anwendungen kann es erforderlich sein, in einer Fluid führenden Leitung ein Rückschlagsperrventil anzuordnen. Beispielweise um eine Fluidströmung nur in einer vorbestimmten Richtung zu erlauben. Insbesondere bei Fahrzeuganwendungen können derartige Rückschlagsperrventile zum Einsatz kommen. Bei einer Verwendung im Rahmen von Großserienprodukten ist eine preiswerte Herstellbarkeit derartiger Rückschlagsperrventile erwünscht.

Aus der US 5,080,122 ist ein Rückschlagsperrventil bekannt, das ein Gehäuse umfasst, das einen von einem Fluid durchströmbaren Strömungsquerschnitt zum Führen eines Fluidstroms enthält. Ferner ist ein im Strömungsquerschnitt ortsfest angeordneter Führungsdorn vorgesehen, der sich in einer Längsrichtung des Strömungsquerschnitts erstreckt. Im Strömungsquerschnitt liegt eine Durchlassöffnung, die koaxial zum Führungsdorn angeordnet ist. Ferner ist ein verstellbares Ventilglied vorhanden, das eine topfförmige Führungshülse und koaxial dazu eine Steuerplatte aufweist, wobei die Führungshülse am Führungsdorn axial verstellbar geführt ist und dabei zwischen einer Schließstellung und einer Offenstellung axial verstellbar ist. In der Schließstellung liegt die Steuerplatte an einem die Durchlassöffnung einfassenden Öffnungsrand axial an und verschließt die Durchlassöffnung. In der Offenstellung liegt die Führungshülse mit ihrem Topfboden axial an einem Anschlagelement an, das ortsfest im Gehäuse axial beabstandet zur Durchlassöffnung angeordnet ist. Beim bekannten Rückschlagsperrventil sind der Öffnungsrand und das Anschlagelement mithilfe separater Bauteile realisiert, die in das Gehäuse eingebaut sind.

Aus der DE 10 2009 012 946 A1 ist ein Rückschlagsperrventil bekannt, das als komplett vormontierbare Einheit in einen Strömungsquerschnitt eines Gehäuses eingesetzt werden kann.

Die vorliegende Erfindung beschäftigt sich mit dem Problem, für ein Rückschlagsperrventil bzw. für eine damit ausgestattete Rohrverbindung eine verbesserte Ausführungsform anzugeben, die insbesondere besonders preiswert realisierbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, in einem Gehäuse, das einen von einem Fluid durchströmbaren Strömungsquerschnitt zum Führen eines Fluidstroms aufweist, einen Führungsdorn ortsfest im Strömungsquerschnitt anzuordnen, der sich parallel zu einer Längsrichtung des Strömungsquerschnitts erstreckt. Koaxial zum Führungsdorn ist im Strömungsquerschnitt eine Durchlassöffnung vorgesehen. Mit Hilfe des Führungsdorns ist ein Ventilglied im Strömungsquerschnitt verstellbar angeordnet. Das Ventilglied kann hierzu eine Führungshülse und eine Steuerplatte aufweisen, die koaxial zur Führungshülse angeordnet ist. Ferner können im Strömungsquerschnitt ortsfest angeordnete Rückhaltestege angeordnet sein, die von der vorstehend genannten Durchlassöffnung axial beabstandet sind.

Die Führungshülse des Ventilglieds ist nun am Führungsdorn axial verstellbar geführt, so dass das Ventilglied geführt zwischen einer Schließstellung und einer Offenstellung axial verstellbar ist. In der Schließstellung des Ventilglieds liegt die Steuerplatte an einem die Durchlassöffnung einfassenden Öffnungsrand axial an. Hierdurch verschließt die Steuerplatte die Durchlassöffnung. In der Offenstellung des Ventilglieds ist die Steuerplatte axial vom Öffnungsrand beabstandet und gibt dadurch die Durchlassöffnung frei. Ferner liegt die Steuerplatte in der Offenstellung an den Rückhaltestegen axial an und ist umströmbar. Da die Rückhaltestege zur Ausbildung eines Axialanschlags für die Offenstellung mit der Steuerplatte zusammenwirken, ergeben sich ein vereinfachter Aufbau und eine vereinfachte Anordnung der Rückhaltestege im Gehäuse. Gleichzeitig baut das Ventil in der Axialrichtung sehr kompakt, da sich insbesondere die Führungshülse sowohl in der Offenstellung als auch in der Schließstellung zentral durch die Rückhaltestege hindurch erstrecken kann, so dass sich eine koaxiale Anordnung der Rückhaltestege und der Führungshülse sowie des Führungsdorns ergibt.

Das hier vorgestellte Rückschlagsperrventil zeichnet sich durch einen extrem einfachen und somit preiswert realisierbaren sowie kompakten Aufbau aus. In besonderer Weise eignet es sich für eine Serienfertigung.

Die Führungshülse ist vorzugsweise an ihrer von der Durchlassöffnung abgewandten Seite, verschlossen. Das Ventilglied ist im Profil insbesondere hutförmig gestaltet.

Gemäß einer vorteilhaften Ausführungsform kann am Öffnungsrand ein ringförmig umlaufender, axial in Richtung zum Ventilglied abstehender Dichtungskragen ausgebildet sein, an dem die Steuerplatte in der Schließstellung axial anliegt. Durch den Dichtungskragen kann eine definierte Kontaktierung zwischen Öffnungsrand und Steuerplatte realisiert werden, die beispielsweise linienförmig oder flächig ausgestaltet sein kann. Hierdurch kann die Dichtungswirkung der Steuerplatte in der Schließstellung verbessert werden.

Gemäß einer anderen Ausführungsform kann die Durchlassöffnung einen Öffnungsquerschnitt aufweisen, der kleiner ist als ein Öffnungsquerschnitt des Strömungsquerschnitts. Die Durchlassöffnung bildet somit eine Engstelle innerhalb des Strömungsquerschnitts des Gehäuses. Durch diese Ausgestaltung ist es jedoch besonders einfach möglich, die Steuerplatte radial außen, also radial zwischen einer den Durchströmungsquerschnitt des Gehäuses einfassenden Wand des Gehäuses und einem Außenrand der Steuerplatte zu umströmen.

Gemäß einer anderen zweckmäßigen Ausführungsform kann das Gehäuse im Strömungsquerschnitt einen die Durchlassöffnung aufweisenden Ring aufweisen, der koaxial zum Strömungsquerschnitt angeordnet ist und den Öffnungsrand besitzt. Mit Hilfe eines derartigen Rings kann besonders einfach innerhalb des Strömungsquerschnitts die Engstelle in Form der Durchlassöffnung realisiert werden. Radial außen grenzt der Ring dann die zuvor genannte Wand, die den Strömungsquerschnitt einfasst, und radial innen grenzt der Ring an die Durchlassöffnung.

Besonders vorteilhaft ist nun eine Weiterbildung, bei welcher der Ring integral am Gehäuse ausgeformt ist.

Bei einer anderen Weiterbildung kann der Führungsdorn am Ring mittels mehrerer radial verlaufender Haltestege gehalten sein. Die Haltestege können den Führungsdorn besonders einfach am Ring und somit zur Durchlassöffnung zentrieren.

Vorteilhaft ist nun eine Weiterbildung, bei welcher der Führungsdorn mit den Haltestegen integral am Ring ausgeformt ist. Besonders zweckmäßig ist es dann, wenn der Führungsdorn, die Haltestege und der Ring integral am Gehäuse ausgeformt sind. Durch vorstehende Maßnahmen kann der Integrationsgrad des Rückschlagsperrventils erhöht werden, während gleichzeitig die Herstellungs- bzw. Montagekosten sinken.

Bei einer anderen vorteilhaften Ausführungsform können die Rückhaltestege axial von einem Rückhaltering abstehen, der in den Strömungsquerschnitt eingesetzt ist. Beim Rückhaltering handelt es sich somit um ein bezüglich des Gehäuses separat hergestelltes Bauteil, das in das Gehäuse einzubauen ist. Insbesondere können die Rückhaltestege nun integral am Rückhaltering ausgeformt sein, was die Montage des Rückschlagsperrventils vereinfacht.

Das Rückhalterohr kann beispielsweise in das Gehäuse eingepresst sein, um den Rückhaltering und somit die Rückhaltestege im Gehäuse axial zu fixieren.

Ferner ist es grundsätzlich möglich, am Gehäuse bzw. an einer den Strömungsquerschnitt einfassenden Wand des Gehäuses einen radial nach innen vorstehenden Bund als Axialanschlag für den Rückhaltering vorzusehen, insbesondere daran integral auszuformen. Der Axialanschlag wirkt dabei in Richtung zur Durchlassöffnung. Das heißt, der Bund ist axial zwischen dem Rückhaltering und der Durchlassöffnung angeordnet. Mit Hilfe eines weiteren Bauteils, das in das Gehäuse eingesetzt wird, lässt sich der Rückhaltering außerdem in der entgegen gesetzten Axialrichtung axial sichern. In diesem Fall ist der Rückhaltering axial zwischen dem Bund und besagtem weiteren, in das Gehäuse eingesteckten Bauteil positioniert.

Alternativ kann zur axialen Positionierung des Rückhalterings im Gehäuse bzw. in genannter Wand eine ringförmige Aufnahmenut ausgebildet sein, die radial innen offen ist und in welche der Rückhaltering radial einsetzbar ist.

Bei einer anderen Ausführungsform kann ein Federelement zum Vorspannen des Ventilglieds in die Offenstellung oder in die Schließstellung vorgesehen sein. Mit Hilfe eines derartigen Federelements kann das Rückschlagsperrventil mit quasi beliebiger räumlicher Orientierung zum Einsatz kommen. Verzichtet man dagegen auf ein derartiges Federelement, scheint es zweckmäßig, das Rückschlagsperrventil innerhalb der jeweiligen Anwendung so zu positionieren, dass sich das Ventilglied vertikal verstellt und sich dabei oberhalb der Durchlassöffnung befindet. Die Schwerkraft treibt dann das Ventilglied in die Schließstellung an.

Bei einer anderen Ausführungsform können ein erster durchströmbarer Öffnungsquerschnitt, der durch die Durchlassöffnung definiert ist, ein zweiter durchströmbarer Öffnungsquerschnitt, der in der Offenstellung durch einen axialen Ringspalt zwischen dem Öffnungsrand und der Steuerplatte definiert ist, ein dritter durchströmbarer Öffnungsquerschnitt, der in der Offenstellung durch einen radialen Ringspalt zwischen einer den Durchströmungsquerschnitt begrenzenden Wand des Gehäuses und der Steuerplatte definiert ist, und ein vierter durchströmbarer Öffnungsquerschnitt, der in der Offenstellung durch einen Spalt zwischen dem Rückhaltering und der Steuerplatte definiert ist, in einem Bereich von maximal +/- 25% gleich groß sein. Durch die ähnlich großen durchströmbaren Öffnungsquerschnitte kann der Druckverlust innerhalb des Rückschlagsperrventils reduziert werden.

Bei einer besonders vorteilhaften Ausführungsform kann das Gehäuse als Rohrkörper ausgestaltet sein. Eine Rohrwand bildet dann die Wand des Gehäuses, die den Strömungsquerschnitt einfasst. Der durchströmbare Querschnitt des Rohrkörpers bildet dann den Strömungsquerschnitt des Gehäuses.

Eine erfindungsgemäße Rohrverbindung umfasst einen ersten Rohrkörper, einen zweiten Rohrkörper und eine Rastverbindung. Der erste Rohrkörper weist ein Rückschlagsperrventil der vorstehend beschriebenen Art auf. Der zweite Rohrkörper ist mit dem ersten Rohrkörper steckbar. Die Rastverbindung fixiert den ersten Rohrkörper am zweiten Rohrkörper und umgekehrt. Die erfindungsgemäße Rohrverbindung umfasst somit zwei Rohrkörper, die steckbar sind und mit Hilfe einer Rastverbindung axial aneinander fixierbar sind. Ferner ist in die Rohrverbindung ein Rückschlagsperrventil integriert. Insbesondere mit den vorstehend bereits erwähnten integralen Ausführungsformen, lässt sich die Rohrverbindung besonders preiswert mit integriertem Rückschlagsperrventil herstellen. Insbesondere kann nämlich das Gehäuse des Rückschlagsperrventils durch den ersten Rohrkörper gebildet sein.

Gemäß einer vorteilhaften Ausführungsform kann ein Innenquerschnitt des Rückhalterings gleich groß sein, wie ein Innenquerschnitt eines in den ersten Rohrkörper eingesteckten axialen Endbereichs des zweiten Rohrkörpers. Hierdurch wird ein Strömungswiderstand am Übergang zwischen dem Rückhaltering und dem zweiten Rohrkörper reduziert.

Gemäß einer vorteilhaften Weiterbildung kann das Ventilglied in der Offenstellung mit seiner Führungshülse in den vorstehend genannten Endbereich des zweiten Rohrkörpers axial hineinragen, wobei der Innenquerschnitt des zweiten Rohrkörpers im Anschluss an den Endbereich abnimmt. Auf diese Weise kann der durchströmbare Querschnitt des zweiten Rohrkörpers die Geometrie des Ventilglieds berücksichtigen, so dass die Durchströmung des Rückschlagsperrventils sowie der Rohrverbindung mit im wesentlichen gleichbleibenden durchströmbaren Querschnitten erfolgt, was den Durchströmungswiderstand der Rohrverbindung mit Rückschlagsperrventil reduziert.

Gemäß einer zweckmäßigen Ausführungsform kann der erste Rohrkörper an seiner Innenseite einen Bund aufweisen, der einen Axialanschlag für den Rückhaltering definiert. Der zweite Rohrkörper, der in den ersten Rohrkörper axial eingesteckt ist, definiert nun mit seiner axialen Stirnseite einen weiteren Axialanschlag für den Rückhaltering, so dass der Rückhaltering dann axial zwischen dem Bund des ersten Rohrkörpers und dem stirnseitigen axialen Ende des zweiten Rohrkörpers gesichert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt durch eine Rohrverbindung mit einem Rückschlagsperrventil in einer Schließstellung,
- Fig. 2: einen Längsschnitt wie in Fig. 1, jedoch in einer Offenstellung des Rückschlagsperrventils,
- Fig. 3: eine vergrößerte Detailansicht der Rohrverbindung im Bereich des Rückschlagsperrventils in der Offenstellung,
- Fig. 4: eine isometrische, auseinander gezogene Darstellung der Rohrverbindung,
- Fig. 5: eine auseinander gezogene Darstellung der Rohrverbindung wie in Fig. 4, jedoch im Längsschnitt.

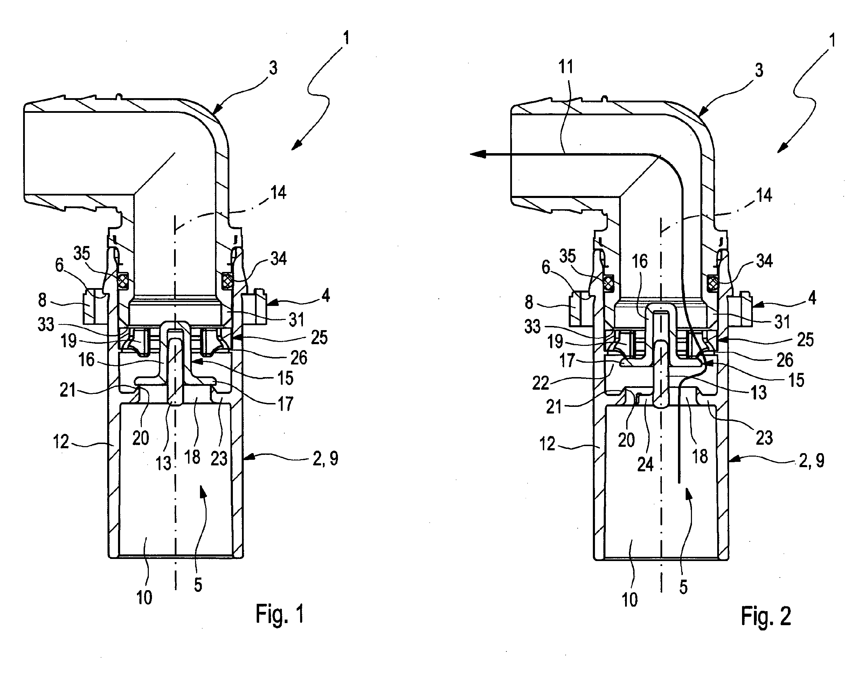

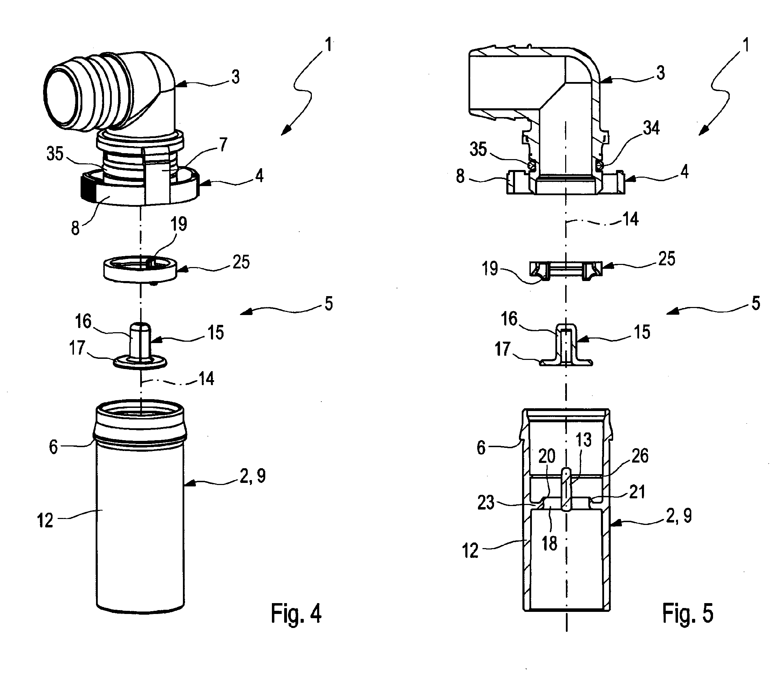

Entsprechend den Fig. 1 bis 5 umfasst eine Rohrverbindung 1 einen ersten Rohrkörper 2 und einen zweiten Rohrkörper 3 sowie eine Rastverbindung 4. Der erste Rohrkörper 2 weist ein Rückschlagsperrventil 5 auf. Der zweite Rohrkörper 3 ist in den ersten Rohrkörper 2 eingesteckt. Hierbei können die Rohrkörper 2, 3 vorzugsweise durch einen thermoplastischen Kunststoff, insbesondere als Kunststoffspritzteile, gebildet werden. Alternativ kann insbesondere der zweite Rohrkörper 3 als Kunststoffblasteil mit einer definierten Außengeometrie, die in den ersten Rohrkörper 2 eingesteckt ist, ausgebildet sein. Die Rastverbindung 4 sichert im gesteckten Zustand die beiden Rohrkörper 2, 3 axial aneinander. Beispielsweise kann hierzu radial außen am ersten Rohrkörper 2 eine ringförmig umlaufende Ringstufe 6 ausgebildet sein, die im Profil eine Rastnase definiert, die ortsfest am ersten Rohrkörper 2 angebracht ist. Der zweite Rohrkörper 3 besitzt beispielsweise zwei Rasthaken 7, von denen einer in Fig. 4 erkennbar ist. Die beiden Rasthaken 7 sind diametral zueinander am zweiten Rohrkörper 3 außen angeordnet, derart, dass sie die Ringstufe 6 beim Einstecken des zweiten Rohrkörpers 3 in den ersten Rohrkörper 2 von außen übergreifen und damit verrasten. Ein Betätigungsring 8 verbindet die beiden Rasthaken 7 in der Umfangsrichtung. Wird der Betätigungsring 8 in Umfangsrichtung zwischen den beiden Rasthaken 7 an sich diametral gegenüberliegenden Bereichen radial nach innen in Richtung des zweiten Rohrkörpers 3 deformiert, werden dadurch die beiden Rasthaken 7 radial nach außen gedrückt, wodurch diese von der Ringstufe 6 radial freikommen, wodurch die Rohrverbindung 1 gelöst werden kann.

Entsprechend den Fig. 1 bis 5 umfasst das Rückschlagsperrventil 5 ein Gehäuse 9, das einen Strömungsquerschnitt 10 aufweist, der von einem hier nicht gezeigten Fluid durchströmbar ist und somit zum Führen eines in Fig. 2 durch einen Pfeil angedeuteten Fluidstroms 11 dient. Zweckmäßig kann dieses Gehäuse 9 als Rohrkörper ausgestaltet sein. Beim hier gezeigten Beispiel ist das Gehäuse 9 durch den ersten Rohrkörper 2 gebildet. Das Gehäuse 9 bzw. der erste Rohrkörper 2 besitzt eine Wand 12, die den Strömungsquerschnitt 10 in der Umfangsrichtung einfasst.

Das Rückschlagsperrventil 5 besitzt einen Führungsdorn 13, der sich in einer Längsrichtung 14 des Strömungsquerschnitts 10 erstreckt, die in den Fig. durch eine strichpunktierte Linie angedeutet ist. Ferner weist das Rückschlagsperrventil 5 ein verstellbares Ventilglied 15 auf. Dieses besitzt eine Führungshülse 16 und eine Steuerplatte 17, die zueinander koaxial angeordnet sind. Insbesondere steht die Steuerplatte 17 radial von der Führungshülse 16 ab und erstreckt sich ringförmig geschlossen. Das Ventilglied 15 ist einfach und kostengünstig aus einem thermoplastischen Kunststoff, insbesondere im Spritzgussverfahren, herstellbar.

Das Rückschlagsperrventil 5 umfasst außerdem eine Durchlassöffnung 18 die im Strömungsquerschnitt 10 liegt und dabei koaxial zum Führungsdorn 13 angeordnet ist. Des Weiteren sind mehrere Rückhaltestege 19 vorgesehen, die im Strömungsquerschnitt 10 ortsfest angeordnet sind und die axial beabstandet von der Durchlassöffnung 18 positioniert sind.

Die Führungshülse 16 ist auf den Führungsdorn 13 aufgesteckt. Eine Innenkontur der Führungshülse 16 und eine Außenkontur des Führungsdorns 13 sind so aufeinander abgestimmt, dass die Führungshülse 16 am Führungsdorn 13 axial verstellbar geführt ist. Die dabei miteinander zusammenwirkenden Konturen können geometrisch gleich oder ähnlich oder auch verschieden sein, solange nur die axiale Führungsfunktion realisiert wird. Bei gleichen geometrischen Konturen kann durch Abstimmung des Spaltmaßes zwischen den Bauteilen eine Dämpfungsrate eingestellt werden, welche durch die Verdrängung/Einströmung des Fluides in das Innere der Führungshülse 16 gebildet wird. Diese Dämpfungsrate verhindert ein abruptes "Herunterfallen" oder Flattern des Ventilglieds 15.

Das Ventilglied 15 ist zwischen der in Fig. 1 gezeigten Schließstellung und der in Fig. 2 gezeigten Offenstellung axial, also parallel zur Längsrichtung 14 des Strömungsquerschnitts 10 verstellbar im Gehäuse 9 angeordnet. Die Steuerplatte 17 liegt in der Schließstellung an einem Öffnungsrand 20 axial an, der die Durchlassöffnung 18 in der Umfangsrichtung einfasst. Die Steuerplatte 17 verschließt in der Schließstellung die Durchlassöffnung 18. In der Offenstellung ist die Steuerplatte 17 gemäß Fig. 2 vom Öffnungsrand 20 axial beabstandet und liegt axial an den Rückhaltestegen 19 an. In der Offenstellung ist die Steuerplatte 17 umströmbar. Die Durchlassöffnung 18 ist dementsprechend geöffnet und das Rückschlagsperrventil 5 ist durchströmbar.

Zweckmäßig weist der Öffnungsrand 20 einen Dichtungskragen 21 auf, der ringförmig umlaufend konzipiert ist und an einer dem Ventilglied 15 zugewandten Axialseite absteht. In diesem Dichtungsbereich liegen somit die Kunststoffteile, ohne weitere Dichtmittel, direkt aufeinander. In der Schließstellung kommt die Steuerplatte 17 an diesem Dichtungskragen 21 axial zur Anlage. Im Beispiel besitzt der Dichtungskragen 21 ein Querschnittsprofil, das sich dreiecksförmig in Richtung zum Ventilglied 15 verjüngt. Die Kontaktierung zwischen Steuerplatte 17 und Dichtungskragen 21 kann - je nach Auslegung des Dichtungskragens 21 - linienförmig oder flächig erfolgen, jedenfalls in der Umgangsrichtung geschlossen.

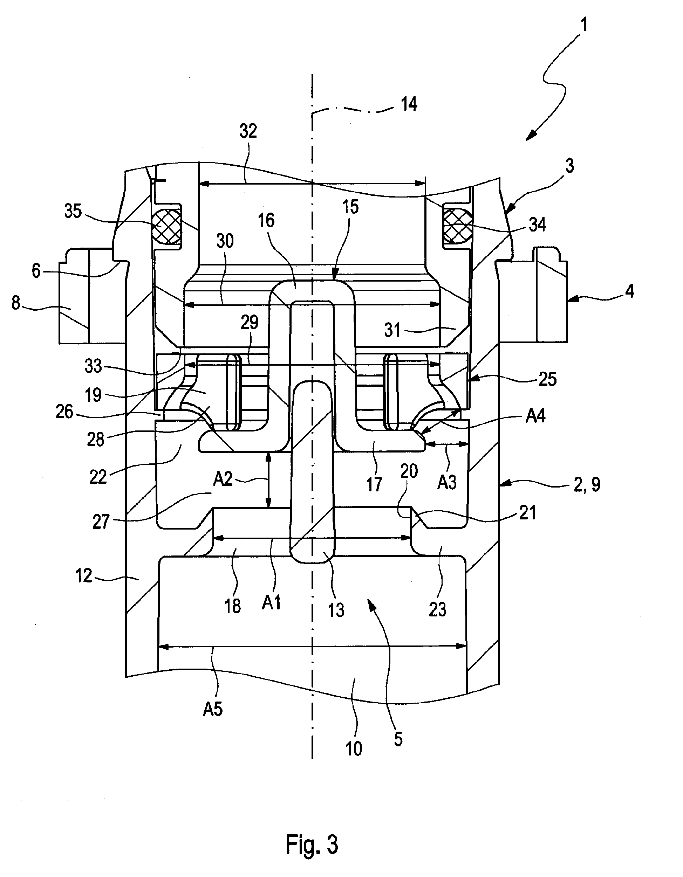

Die Durchlassöffnung 18 besitzt einen durchströmbaren Öffnungsquerschnitt, der in Fig. 3 mit A1 bezeichnet ist. Der Strömungsquerschnitt 10 besitzt einen Öffnungsquerschnitt, der in Fig. 3 mit A5 bezeichnet ist. Zweckmäßig ist nun der Öffnungsquerschnitt A1 der Durchlassöffnung 18 kleiner als der Öffnungsquerschnitt A5 des Strömungsquerschnitts 10. Durch Anpassen der Steuerplatte 17 an den Öffnungsquerschnitt A1 der Durchlassöffnung 18 lässt sich das Rückschlagsperrventil 5 besonders einfach so konzipieren, dass die Steuerplatte 17, sobald sie vom Öffnungsrand 20 abhebt, radial außen umströmbar ist. Hierdurch öffnet sich ein Ringspalt 22 radial zwischen der Wand 12 und der Steuerplatte 17. Dieser Ringspalt 22 besitzt einen durchströmbaren Öffnungsquerschnitt, der in Fig. 3 mit A3 bezeichnet ist.

Zur Realisierung der Durchlassöffnung 18 kann das Gehäuse 9 im Durchströmungsquerschnitt 10 einen Ring 23 aufweisen, der koaxial zum Durchströmungsquerschnitt 10 angeordnet ist und der den Öffnungsrand 20 aufweist. Bei den hier gezeigten Ausführungsformen ist der Ring 23 integral am Gehäuse 9 ausgeformt.

Der Führungsdorn 13 ist hier am Ring 23 gehalten. Hierzu sind mehrere radial verlaufende Haltestege 24 vorgesehen, von denen lediglich einer in Fig. 2 angedeutet ist. Die Haltestege 24 erstrecken sich ausgehend vom Öffnungsrand 20 radial nach innen bis zum Führungsdorn 13. Zweckmäßig kann nun der Führungsdorn 13 mit den Haltestegen 24 integral am Ring 23 ausgeformt sein. Besonders vorteilhaft ergibt sich dann eine Ausführungsform, bei welcher der Führungsdorn 13, die Haltestege 24 und der Ring 23 integral am Gehäuse 9 ausgeformt sind.

Bei der hier gezeigten Ausführungsform sind die Rückhaltestege 19 jeweils an einem Rückhaltering 25 ausgebildet, von denen sie axial abstehen. Im Beispiel stehen die Rückhaltestege 19 vom Rückhaltering 25 außerdem radial nach innen ab. Der Rückhaltering 25 ist bezüglich des Gehäuses 9 ein separates Bauteil. Entsprechend einer vorteilhaften Ausführungsform kann der Rückhaltering 25 integral am zweiten Rohrkörper 3 ausgeformt sein. Bei einer derartigen Bauform wird das Rückschlagsperrventil 5 erst dann komplettiert, wenn die beiden Rohrkörper 2, 3 ineinander gesteckt sind. Bevorzugt ist jedoch eine Ausführungsform, bei welcher der Rückhaltering 25 separat von beiden Rohrkörpern 2, 3 hergestellt ist und in den ersten Rohrkörper 2 bzw. in das Gehäuse 9 einsteckbar ist.

Zweckmäßig sind die Rückhaltestege 19 integral am Rückhaltering 25 ausgeformt, was die Handhabung und Montage des Rückhalterings 25 mit den Rückhaltestegen 19 vereinfacht. Der Rückhaltering 25 kann beispielsweise in das Gehäuse 9 bzw. in den ersten Rohrkörper 2 axial eingesteckt sein. Am Gehäuse 9 bzw. an dessen Wand 12 kann in einer dem Strömungsquerschnitt 10 zugewandten Innenseite ein ringförmig umlaufender Bund 26 ausgebildet sein, der die axiale Einstecktiefe des Rückhalterings 25 axial begrenzt. Hierdurch kann für die Offenstellung des Ventilglieds 15 eine definierte Position bestimmt werden.

Alternativ kann für die axiale Fixierung des Rückhalterings 25 am Gehäuse 9 eine hier nicht gezeigte ringförmig umlaufende Aufnahmenut an der Innenseite der Wand 12 ausgespart sein, in welche der Rückhaltering 25 einsetzbar ist.

Bei einer einfachen Ausführungsform kann die Rohrverbindung 1 gemäß den Fig. 1 und 2 aufrecht verwendet werden, so dass sich im Gebrauch die in den Fig. 1 und 2 gezeigte Raumlage ergibt, bei welcher der zweite Rohrkörper 3 im Wesentlichen vertikal oberhalb des ersten Rohrkörpers 2 angeordnet ist und vertikal damit gesteckt ist. In diesem Fall kommt das Rückschlagsperrventil 5 ohne zusätzliches Federelement aus, da die Schwerkraft das Ventilglied 15 nach unten, also in die Schließstellung antreibt.

Alternativ ist es ebenso möglich, ein geeignetes, hier nicht gezeigtes Federelement vorzusehen, um das Ventilglied 15 entweder in die Schließstellung oder in die Offenstellung vorzuspannen. Die Raumlage der Rohrverbindung 1 kann dann beliebig gewählt werden.

Gemäß Fig. 3 ist innerhalb des Rückschlagsperrventils 5 der erste durchströmbare Öffnungsquerschnitt A1 durch die Durchlassöffnung 18 definiert. Ein zweiter durchströmbarer Öffnungsquerschnitt A2 ist durch einen axialen Ringspalt 27 definiert, der sich in der Offenstellung zwischen den Öffnungsrand 20 und der Steuerplatte 17 einstellt. Ein dritter durchströmbarer Öffnungsquerschnitt A3 ist wie erwähnt durch den radialen Ringspalt 22 definiert, der sich in der Offenstellung radial zwischen der Wand 12 und der Steuerplatte 17 einstellt. Ein vierter durchströmbarer Öffnungsquerschnitt A4 ist in der Offenstellung durch einen Spalt 28 definiert, der sich bei geöffnetem Ventilglied 15 zwischen dem Rückhaltering 25 und der Steuerplatte 17 einstellt. Ein fünfter durchströmbarer Öffnungsquerschnitt A5 ist durch den Strömungsquerschnitt 10 definiert. Zweckmäßig sind nun der erste Öffnungsquerschnitt A1, der zweite Öffnungsquerschnitt A2, der dritte Öffnungsquerschnitt A3 und der vierte Öffnungsquerschnitt A4 im Wesentlichen gleich groß dimensioniert. Insbesondere sind sie innerhalb eines Bereichs von maximal 25% gleich groß. Das bedeutet, dass die einzelnen Öffnungsquerschnitte A1 bis A4 maximal um 25% voneinander abweichen.

In Fig. 3 ist außerdem ein Innenquerschnitt 29 des Rückhalterings 25 wiedergegeben. Erkennbar ist dieser Innenquerschnitt 29 im Wesentlichen gleich groß wie ein Innenquerschnitt 30, den der zweite Rohrkörper 3 in einem axialen Endbereich 31 aufweist, der in den ersten Rohrkörper 2 axial eingesteckt ist. Somit ergibt sich hier ein widerstandsarmer Übergang vom ersten Rohrkörper 2 zum zweiten Rohrkörper 3. Der axiale Endbereich 31 ist axial so dimensioniert, dass das Ventilglied 15 in seiner Offenstellung mit der Führungshülse 16 bis in diesen Endbereich 31 des zweiten Rohrkörpers 3 axial hineinragen kann. Erkennbar besitzt der zweite Rohrkörper 3 in Anschluss an seinen axialen Endabschnitt 31 einen Innenquerschnitt 32, der kleiner ist als der Innenquerschnitt 30 innerhalb des Endbereichs 31. Hierdurch kann die durch die Führungshülse 16 bewirkte Verengung des durchströmbaren Querschnitts innerhalb des Endabschnitts 31 kompensiert werden.

Bei dem hier gezeigten Beispiel ist der Rückhaltering 25 axial zwischen dem Bund 26 des ersten Rohrkörpers 2 und einer dem Rückschlagsperrventil 5 zugewandten axialen Stirnseite 33 des zweiten Rohrkörpers 3 positioniert und axial gesichert.

Die Montage der Rohrverbindung 1 bzw. des Rückschlagsperrventils 5 erfolgt gemäß den Fig. 4 und 5 besonders einfach. Nach dem Herstellen des Gehäuses 9 bzw. des ersten Rohrkörpers 2 ist lediglich das Ventilglied 15 einzusetzen, derart, dass es mit seiner Führungshülse 16 auf den Führungsdorn 13 aufgesteckt wird. Anschließend wird der Rückhaltering 25 eingesteckt, z.B. bis dieser axial an dem Bund 26 anstößt. Anschließend ist das Rückschlagsperrventil 5 bereits fertiggestellt. Danach kann der zweite Rohrkörper 3 gesteckt werden, bis die Rasteinrichtung 4 verrastet.

Im Beispiel weist der Rohrkörper 3 in dem in den ersten Rohrkörper 2 eingesteckten Abschnitt radial außen eine Aufnahmenut 34 auf, in die eine Dichtung 35 eingesetzt ist, die radial dichtet. Zweckmäßig handelt es sich hierbei um eine Ringdichtung, insbesondere ein O-Ring.

## Patentansprüche

1. Rückschlagsperrventil,
- mit einem Gehäuse (9), das einen von einem Fluid durchströmbaren Strömungsquerschnitt (10) zum Führen eines Fluidstroms (11) aufweist,
- mit einem im Strömungsquerschnitt (10) ortsfest angeordneten Führungsdorn (13), der sich in einer Längsrichtung (14) des Strömungsquerschnitts (10) erstreckt,
- mit einer im Strömungsquerschnitt (10) liegenden Durchlassöffnung (18), die koaxial zum Führungsdorn (13) angeordnet ist,
- mit einem verstellbaren Ventilglied (15), das eine Führungshülse (16) und koaxial dazu eine Steuerplatte (17) aufweist,
- wobei die Führungshülse (16) am Führungsdorn (13) axial verstellbar geführt ist,
- wobei das Ventilglied (15) zwischen einer Schließstellung und einer Offenstellung axial verstellbar ist,
- wobei die Steuerplatte (17) in der Schließstellung an einem die Durchlassöffnung (18) einfassenden Öffnungsrand (20) axial anliegt und die Durchlassöffnung (18) verschließt"
**dadurch gekennzeichnet,**
- **dass** im Strömungsquerschnitt (10) axial beabstandet von der Durchlassöffnung (18) mehrere Rückhaltestege (19) ortsfest angeordnete sind,
- **dass** die Steuerplatte (17) in der Offenstellung an den Rückhaltestegen (18) axial anliegt und umströmbar ist.

2. Rückschlagsperrventil nach Anspruch 1,
**dadurch gekennzeichnet,**
**dass** am Öffnungsrand (20) ein ringförmig umlaufender, axial in Richtung Ventilglied (15) abstehender Dichtungskragen (21) ausgebildet ist, an dem die Steuerplatte (17) in der Schließstellung axial anliegt.

3. Rückschlagsperrventil nach Anspruch 1 oder 2,
**dadurch gekennzeichnet,**
**dass** die Durchlassöffnung (18) einen Öffnungsquerschnitt (A1) aufweist, der kleiner ist als ein Öffnungsquerschnitt (A5) des Strömungsquerschnitts (10).

4. Rückschlagsperrventil nach einem der Ansprüche 1 bis 3,
**dadurch gekennzeichnet,**
- **dass** das Gehäuse (9) im Strömungsquerschnitt (10) einen die Durchlassöffnung (18) aufweisenden Ring (23) aufweist, der koaxial zum Durchströmungsquerschnitt (10) angeordnet ist und den Öffnungsrand (20) besitzt,
- **dass** der Ring (23) integral am Gehäuse (9) ausgeformt ist.

5. Rückschlagsperrventil nach Anspruch 4,
**dadurch gekennzeichnet,**
**dass** der Führungsdorn (13) am Ring (23) mittels mehrerer radial verlaufende Haltestege (24) gehalten ist.

6. Rückschlagsperrventil nach Anspruch 5,
**dadurch gekennzeichnet,**
**dass** der Führungsdorn (13) mit den Haltestegen (24) integral am Ring (23) ausgeformt ist.

7. Rückschlagsperrventil nach Anspruch 6,
**dadurch gekennzeichnet,**
**dass** der Führungsdorn (13), die Haltestege (24) und der Ring (23) am Gehäuse (9) integral ausgeformt sind.

8. Rückschlagsperrventil nach einem der Ansprüche 1 bis 7,
**dadurch gekennzeichnet,**
**dass** die Rückhaltestege (19) axial von einem Rückhaltering (25) abstehen, der in den Durchströmungsquerschnitt (10) eingesetzt ist und an einem Bund (26) axial abgestützt ist, der integral am Gehäuse (9) ausgeformt ist.

9. Rückschlagsperrventil nach einem der Ansprüche 1 bis 8,
**dadurch gekennzeichnet,**
**dass** ein Federelement zum Vorspannen des Ventilglieds (15) in die Offenstellung oder in die Schließstellung vorgesehen ist.

10. Rückschlagsperrventil nach einem der Ansprüche 1 bis 9,
**dadurch gekennzeichnet,**
**dass** ein erster durchströmbarer Öffnungsquerschnitt (A1), der durch die Durchlassöffnung (18) definiert ist, ein zweiter durchströmbarer Öffnungsquerschnitt (A2), der in der Offenstellung durch einen axialen Ringsspalt (27) zwischen dem Öffnungsrand (20) und der Steuerplatte (17) definiert ist, ein dritter durchströmbarer Öffnungsquerschnitt (A3), der in der Offenstellung durch einen radialen Ringspalt (22) zwischen einer den Durchströmungsquerschnitt (10) begrenzenden Wand (12) des Gehäuses (9) und der Steuerplatte (17) definiert ist, und ein vierter durchströmbarer Öffnungsquerschnitt (A4), der in der Offenstellung durch einen Spalt (28) zwischen den Rückhaltering (25) und der Steuerplatte (17) definiert ist, in einem Bereich von maximal +/- 25% gleich groß sind.

11. Rückschlagsperrventil nach einem der Ansprüche 1 bis 10,
**dadurch gekennzeichnet,**
**dass** das Gehäuse (9) als Rohrkörper (2) ausgestaltet ist.

12. Rohrverbindung,
- mit einem ersten Rohrkörper (2), der ein Rückschlagsperrventil (5) nach einem der Ansprüche 1 bis 11 aufweist,
- mit einem zweiten Rohrkörper (3), der mit dem ersten Rohrkörper (2) gesteckt ist,
- mit einer Rastverbindung (4), die den ersten Rohrkörper (2) am zweiten Rohrkörper (3) axial fixiert.

13. Rohrverbindung nach Anspruch 12,
**dadurch gekennzeichnet,**
**dass** das Gehäuse (9) des Rückschlagsperrventils (5) durch den ersten Rohrkörper (2) gebildet ist.

14. Rohrverbindung nach Anspruch 12 oder 13,
**dadurch gekennzeichnet,**
**dass** ein Innenquerschnitt (29) des Rückhalterings (25) gleich groß ist wie ein Innenquerschnitt (30) eines in den ersten Ringkörper (2) eingesteckten axialen Endbereichs (31) des zweiten Rohrkörpers (3).

15. Rohrverbindung nach Anspruch 14,
**dadurch gekennzeichnet,**
**dass** das Ventilglied (15) in der Offenstellung mit der Führungshülse (16) in den Endbereich (31) des zweiten Rohrkörpers (3) axial hineinragt, wobei ein Innenquerschnitt (32) des zweiten Rohrkörpers (3) im Anschluss an den Endbereich (31) gegenüber dem Innenquerschnitt (30) des Endbereichs (31) reduziert ist.

## Claims

1. A non-return valve,
- with a housing (9) that has a flow cross-section (10) through which a fluid can flow and which serves for guiding a fluid flow (11),
- with a guide pin (13) that is arranged stationarily in the flow cross-section (10) and extends in a longitudinal direction (14) of the flow cross-section (10),
- with a passage opening (18) that is situated in the flow cross-section (10) and is arranged coaxial to the guide pin (13),
- with an adjustable valve member (15) that has a guide sleeve (16) and a control plate (17) arranged coaxial to said guide sleeve,
- wherein the guide sleeve (16) is guided on the guide pin (13) in an axially adjustable manner,
- wherein the valve member (15) is axially adjustable between a closed position and an open position,
- wherein in the closed position, the control plate (17) rests axially against an opening edge (20) enclosing the passage opening (18), and closes the passage opening (18),
**characterized in**
- **that** a plurality of retaining webs (19) are arranged stationarily in the flow cross-section (10) and are spaced apart from the passage opening (18),
- **that** in the open position, the control plate (17) rests axially against the retaining webs (18) and a flow can pass around said control plate.

2. The non-return valve according to claim 1, **characterized in that** a sealing collar (21) is formed at the opening edge (20), which sealing collar extends annularly and circumferentially and projects axially in the direction toward the valve member (15), and against which the control plate (17) rests axially in the closed position.

3. The non-return valve according to claim 1 or claim 2, **characterized in that** the passage opening (18) has an opening cross-section (A1) that is smaller than an opening cross-section (A5) of the flow cross-section (10).

4. The non-return valve according to any one of the claims 1 to 3
**characterized in**
- **that** in the flow cross-section (10), the housing (9) has a ring (23) which comprises the passage opening (18), is arranged coaxial to the flow cross-section (10) and has the opening edge (20),
- **that** the ring (23) is formed integrally on the housing (9).

5. The non-return valve according to claim 4, **characterized in that** the guide pin (13) is held at the ring (23) by means of a plurality of radially extending holding webs (24).

6. The non-return valve according to claim 5, **characterized in that** the guide pin (13) and the holding webs (24) are integrally formed on the ring (23).

7. The non-return valve according to claim 6, **characterized in that** the guide pin (13), the holding webs (24) and ring (23) are integrally formed on the housing (9).

8. The non-return valve according to any one of the claims 1 to 7, **characterized in that** the retaining webs (19) protrude axially from a retaining ring (25) that is inserted into the flow cross-section (10) and is axially supported on a collar (26) that is integrally formed on the housing (9).

9. The non-return valve according to any one of the claims 1 to 8, **characterized in that** a spring element is provided for biasing the valve member (15) into the open position or the closed position.

10. The non-return valve according to any one of the claims 1 to 9, **characterized in that** a first opening cross-section (A1) through which a flow can pass and which is defined by the passage opening (18), a second opening cross-section (A2) through which a flow can pass and which, in the open position, is defined by an axial annular gap (27) between the opening edge (20) and the control plate (17), a third opening cross-section (A3) through which a flow can pass and which, in the open position, is defined by a radial annular gap (22) between a wall (12) of the housing (9), which wall borders the flow cross-section (10), and the control plate (17), and a fourth opening cross-section (A4) which, in the open position, is defined by a gap (28) between the retaining ring (25) and the control plate (17), have the same size within a maximum range of +/- 25%.

11. The non-return valve according to any one of the claims 1 to 10, **characterized in that** the housing (9) is configured as a tube body (2).

12. A tube connection
- with a first tube body (2) that comprises a non-return valve (5) according to any one of the claims 1 to 11,
- with a second tube body (3) that is plugged together with the first tube body (2),
- with a snap-on connection (4) that axially fixes the first tube body (2) on the second tube body (3).

13. The tube connection according to claim 12, **characterized in that** the housing (9) of the non-return valve (5) is formed by the first tube body (2).

14. The tube connection according to claim 12 or claim 13, **characterized in that** an inner cross-section (29) of the retaining ring (25) has the same size as an inner cross-section (30) of an axial end region (31) of the second tube body (3), which axial end region is inserted into the first ring body (2).

15. The tube connection according to claim 14, **characterized in that** in the open position, the valve member (15) protrudes with the guide sleeve (16) axially into the end region (31) of the second tube body (3), wherein an inner cross-section (32) of the second tube body (3), which inner cross-section is connected to the end region (31), is reduced with respect to the inner cross-section (30) of the end region (31).

## Revendications

1. Valve de retenue anti-retour,
- avec un logement (9), qui présente une section transversale d'écoulement (10) traversée par un fluide pour guider un courant de fluide (11),
- avec une broche de guidage (13) disposée de manière stationnaire dans la section transversale d'écoulement (10), qui s'étend dans une direction longitudinale (14) de la section transversale d'écoulement (10),
- avec une ouverture de passage (18) située dans la section transversale d'écoulement (10), qui est disposée coaxialement à la broche de guidage (13),
- avec un organe de soupape ajustable (15), qui présente un manchon de guidage (16) et une plaque de commande (17) coaxiale à celui-ci,
- dans laquelle le manchon de guidage (16) est guidé de manière ajustable axialement sur la broche de guidage (13),
- dans laquelle l'organe de soupape (15) est ajustable axialement entre une position de fermeture et une position d'ouverture,
- dans laquelle la plaque de commande (17) vient reposer dans la position de fermeture sur un bord d'ouverture (20) sertissant l'ouverture de passage (18) et obture l'ouverture de passage (18),
**caractérisée en ce que**
- plusieurs gradins de retenue (19) sont disposés de manière stationnaire dans la section transversale d'écoulement (10) en étant espacés axialement de l'ouverture de passage (18),
- la plaque de commande (17) vient reposer dans la position d'ouverture sur les gradins de retenue (18) et peut être contournée par l'écoulement.

2. Valve de retenue anti-retour selon la revendication 1, **caractérisée en ce que** sur le bord d'ouverture (20) un collet de retenue (21) annulaire en faisant le tour, dépassant en saillie axialement dans la direction de l'organe de soupape (15) est réalisé, sur lequel la plaque de commande (17) vient reposer axialement dans la position de fermeture.

3. Valve de retenue anti-retour selon les revendications 1 ou 2, **caractérisée en ce que** l'ouverture de passage (18) présente une section transversale d'ouverture (A1), qui est plus petite qu'une section transversale d'ouverture (A5) de la section transversale d'écoulement (10).

4. Valve de retenue anti-retour selon une des revendications 1 à 3, **caractérisée en ce que**
- le logement (9) présente dans la section transversale d'écoulement (10) une bague (23) présentant l'ouverture de passage (18), qui est disposée coaxialement à la section transversale d'écoulement (10) et possède le bord d'ouverture (20),
- la bague (23) est façonnée en un seul tenant sur le logement (9).

5. Valve de retenue anti-retour selon la revendication 4, **caractérisée en ce que** la broche de guidage (13) est maintenue sur la bague (23) au moyen de plusieurs gradins de retenue (24) s'étendant radialement.

6. Valve de retenue anti-retour selon la revendication 5, **caractérisée en ce que** la broche de guidage (13) est façonnée avec les gradins de retenue (24) en un seul tenant sur la bague (23).

7. Valve de retenue anti-retour selon la revendication 6, **caractérisée en ce que** la broche de guidage (13), les gradins de retenue (24) et la bague (23) sont façonnés en un seul tenant sur le logement (9).

8. Valve de retenue anti-retour selon une des revendications 1 à 7, **caractérisée en ce que** les gradins de retenue (19) dépassent en saillie axialement d'une bague de retenue (25), qui est insérée dans la section transversale d'écoulement (10) et est appuyée axialement sur un collier (26), qui est façonné en un seul tenant sur le logement (9).

9. Valve de retenue anti-retour selon une des revendications 1 à 8, **caractérisée en ce que** un élément de ressort pour contraindre l'organe de soupape (15) est prévu dans la position d'ouverture ou dans la position de fermeture.

10. Valve de retenue anti-retour selon une des revendications 1 à 9, **caractérisée en ce que** une première section transversale d'ouverture (A1) traversée par un écoulement, qui est définie à travers l'ouverture de passage (18), une deuxième section transversale d'ouverture (A2) traversée par un écoulement, qui est définie dans la position d'ouverture par un fente annulaire axiale (27) entre le bord d'ouverture (20) et la plaque de commande (17), une troisième section transversale d'ouverture (A3) traversée par un écoulement, qui est définie dans la position d'ouverture par une fente annulaire radiale (22) entre une paroi (12) du logement (9) délimitant la section transversale d'écoulement (10) et la plaque de commande (17), et une quatrième section transversale d'ouverture (A4) traversée par un courant, qui est définie dans la position d'ouverture par une fente (28) entre la bague de retenue (25) et la plaque de commande (17), sont de taille identique dans une plage maximale de +/- 25%.

11. Valve de retenue anti-retour selon une des revendications 1 à 10, **caractérisée en ce que** le corps (9) est conçu comme un corps tubulaire (2).

12. Raccord de tuyau,
- avec un premier corps tubulaire (2), qui présente une valve de retenue anti-retour (5) selon une des revendications 1 à 11,
- avec un deuxième corps tubulaire (3), qui est enfiché avec le premier corps tubulaire (2),
- avec une liaison par encliquetage (4), qui fixe axialement le premier corps tubulaire (2) sur le deuxième corps tubulaire (3).

13. Raccord de tuyau selon la revendication 12, **caractérisé en ce que** le logement (9) de la valve de retenue anti-retour (5) est formé par le premier corps tubulaire (2).

14. Raccord de tuyau selon les revendications 12 ou 13, **caractérisé en ce que** une section transversale intérieure (29) de la bague de retenue (25) est aussi grande qu'une section transversale intérieure (30) d'une zone d'extrémité (31) axiale du deuxième corps tubulaire (3), enfichée dans le premier corps tubulaire (2).

15. Raccord de tuyau selon la revendication 14, **caractérisé en ce que** l'organe de soupape (15) dans la position d'ouverture dépasse axialement par le manchon de guidage (16) dans la zone d'extrémité (31) du deuxième corps tubulaire (3), dans lequel une section transversale intérieure (32) du deuxième corps tubulaire (3) est réduite en raccord à la zone d'extrémité (31) par rapport à la section transversale intérieure (30) de la zone d'extrémité (31).
